# EUROPÄISCHE PATENTANMELDUNG

(11) **EP 2 314 861 A1**
(43) Veröffentlichungstag der Anmeldung: **27.04.2011**
(21) Anmeldenummer: 10186849.5
(22) Anmeldetag: 07.10.2010
(51) Int. Cl.: F02N 11/14, H02J 7/14, B60R 16/04

(54) **Bordnetz für ein Kraftfahrzeug**

(30) Priorität: 21.10.2009 DE 102009050126
(71) Anmelder: Continental Automotive GmbH, 30165 Hannover (DE)
(72) Erfinder: Bolz, Stephan, 93102 Pfatter (DE)

(57) **Zusammenfassung**

Die Erfindung betrifft ein Bordnetz, das ein Verbraucher-Generator-Teilnetz (V) mit zumindest einem elektrischen Verbraucher (6), einem Generator (11) und einem ersten Energiespeicher (8), ein Starterteilnetz (S) mit einem Starter (1) und einem zweiten Energiespeicher (2), dessen Nominalspannung größer als die Nominalspannung des ersten Energiespeichers (8) ist und der insbesondere mit Doppelschichtkondensatoren gebildet ist, und ein Zwischennetz (Z) mit einem dritten Energiespeicher (4), insbesondere einem Lithium-Ionen- oder Lithium-Polymer-Akkumulator, dessen Nominalspannung größer als die Nominalspannung des zweiten Energiespeichers (2) ist, aufweist. Das Zwischennetz (Z) ist mit dem Verbrauchernetz (V) über einen ersten Spannungswandler (5) und mit dem Starternetz (S) über einen zweiten Spannungswandler (3) elektrisch gekoppelt ist. Das Bordnetz weist eine Kontrolleinrichtung (9) auf, die die elektrischen Spannungen im Zwischennetz (Z), im Verbraucher-Generator-Teilnetz (V) und im Starterteilnetz (S) steuert oder regelt. In erfindungsgemäßer Weise ist der zweite Energiespeicher (2) über einen steuerbaren Schalter (12) mit dem ersten Energiespeicher (8) verbunden, wobei der steuerbare Schalter (12) von einer Steuereinrichtung (13) nur geschlossen werden kann, wenn sich die Spannungen am ersten Energiespeicher (8) und am zweiten Energiespeicher (2) maximal um einen vorgegebenen Differenzwert unterscheiden, und die Spannung am ersten Energiespeicher (8) größer als ein vorgegebener Minimalwert ist.

## Beschreibung

### Bordnetz für ein Kraftfahrzeug

Bei modernen Fahrzeugen werden hydraulische und pneumatische Systeme zur Servounterstützung, etwa für Lenkung oder Bremse, zunehmend elektrifiziert. Neben höherer Ansprechgeschwindigkeit und geringerem Energieverbrauch bietet dies die Möglichkeit, teilweise oder ganz auf Hydrauliksysteme im Fahrzeug zu verzichten. Eine Herausforderung dabei ist die Beherrschung der Stromspitzen beim Einschalten der Servomotoren, die dynamische Hochstromverbraucher sind, weil Werte von mehreren 100A für den Zeitraum von einigen 100ms auftreten können.

In einem Standard 12-V-Bordnetz mit Blei-Säure Batterie führt solch eine Stromspitze zu einem Spannungseinbruch, der sich beispielsweise als kurzfristiges Absinken der Beleuchtung (Flackern) störend bemerkbar macht oder im ungünstigsten Falle sogar zum kurzfristigen Aussetzen von Radio oder Navigationssystem führen kann.

Dieses Problem tritt in verstärkter Form auch bei Betätigung des Starters auf, weshalb verschiedene Konzepte zur Verminderung des Einflusses von Schwankungen der Bordnetzspannung auf elektrische Geräte entwickelt wurden. So offenbart die DE 10 2007 048 342 A1 ein Bordnetz, das Bordnetzschwankungen beim Anlassvorgang durch eine separate Versorgung des Starters vermeidet.

Dort ist einerseits ein übliches 12V-Bordnetz vorgesehen, das einen Generator aufweist, der bei laufendem Motor die Verbraucher in diesem 12V-Bordnetz versorgt. Ein erster Energiespeicher, der eine herkömmlicher Blei-Säure-Batterie aber auch ein geeignet dimensionierter Kondensator sein kann, dient hauptsächlich zur Pufferung der vom Generator gelieferten Versorgungsspannung. Ein solches Standard-12V-Bordnetz hat im Normalbetrieb einen spezifizierten Betriebsspannungsbereich von 9V (Startvorgang) bis 13,8V (Ladespannung der Blei-Säure-Batterie). In diesem Spannungsbereich müssen sämtliche Lasten/Verbraucher bestimmungsgemäß funktionieren. Auch ist bei normaler Umgebungstemperatur ein erweiterter Spannungsbereich von 24V (Jumpstart, 60sec.) ohne Funktionseinschränkungen spezifiziert.

Das bekannte Bordnetz weist außerdem einen Starter auf, der über einen Schalter mit einem zweiten Energiespeicher, dessen Nominalspannung größer als die Nominalspannung des Verbraucher-Generator-Teilbordnetzes ist, verbunden werden kann. Der zweite Energiespeicher ist in vorteilhafter Weise mit Doppelschichtkondensatoren gebildet, die eine große Leistungsdichte bei gleichzeitig großem Wirkungsgrad haben. Eine sinnvolle Nominalspannung kann beispielsweise 18V sein. Diese Spannung ist jedoch starken Schwankungen unterworfen, da der zweite Energiespeicher bei einem Startvorgang stark entladen wird und somit seine Spannung deutlich geringer werden kann.

Um nun einerseits den zweiten Energiespeicher nach einem Startvorgang wieder nachladen zu können, andererseits bei abgeschaltetem Motor das Verbraucher-Generator-Teilbordnetz zu stützen und auch bei laufendem Motor Stromspitzen in dem Verbraucher-Generator-Teilbordnetz abfedern zu können, ist ein dritter Energiespeicher mit großer Energiedichte vorgesehen. Dieser dritte Energiespeicher ist in vorteilhafter Weise mit einem Lithium-Ionen- oder Lithium-Polymer-Akkumulator gebildet und weist eine Nominalspannung auf die größer als die Nominalspannung des zweiten Energiespeichers, beispielsweise 22V, ist. Dieser dritte Energiespeicher ist über einen ersten DC/DC-Wandler mit dem ersten und über eine zweiten DC/DC-Wandler mit dem zweiten Energiespeicher verbunden, er kann folglich einerseits den zweiten Energiespeicher nach einem Startvorgang nachladen und andererseits das Verbraucher-Generator-Teilbordnetz bei hohem Energiebedarf versorgen und auch den ersten Energiespeicher nachladen. Da der erste DC/DC-Wandler in vorteilhafter Weise bidirektional ausgebildet ist, kann der dritte Energiespeicher vom Generator nachgeladen werden. Durch diese Anordnung des dritten Energiespeichers in einem über DC/DC-Wandler mit dem Starter- und dem Verbraucher-Generator-Teilbordnetz verbundenen Zwischenkreis, kann die Nominalspannung und die Kapazität des dritten Energiespeichers in weiten Grenzen je nach Anwendung gewählt werden.

Bei dem bekannten Bordnetz werden die DC/DC-Wandler von einer Kontrolleinrichtung abhängig vom tatsächlichen und dem aktuell gewünschten Ladungszustand der Energiespeicher gesteuert bzw. geregelt. Aufgrund der Trennung von Starter- und Verbraucher-Generator-Teilbordnetz kann dieses Bordnetz in bestehende 12V-Bordnetze mit nur geringen Anpassungen eingefügt werden.

Um einen der oben beschriebenen dynamischen Hochstromverbraucher an ein solches Bordnetz anschließen, bestehen zwei Möglichkeiten. Die Hochstromverbraucher können parallel zu den übrigen Verbrauchern am 12V-Bordnetz oder parallel zum Starter am zweiten Energiespeicher angeschlossen werden.

Bei genauerer Betrachtung der sich dabei ergebenden Betriebssituationen ergibt sich jedoch eine Reihe von Schwierigkeiten. Zum einen wird das 12V-Bordnetz mittels des ersten DC/DC-Spannungswandlers aus dem dritten Energiespeicher (vorzugsweise eine Lithium-Polymer-Batterie) gespeist, wobei der maximale Abgabestrom sinnvollerweise dem Gesamtverbrauch des Bordnetzes entspricht; beispielsweise 150A. Bei laufendem Verbrennungsmotor liefert der Generator dann den wesentlichen Stromanteil zur Bordnetzversorgung, um eine Entladung des Energiespeichers zu vermeiden. Sein maximaler Abgabestrom beträgt beispielsweise 150A. Insgesamt stehen dem Bordnetz also bis zu 300A zur Verfügung, wobei die regulären Verbraucher bis zu 150A benötigen können. Zusätzlich ist zu beachten, dass der Generator bei sprunghaft steigendem Strombedarf im Bordnetz funktionsbedingt eine gewisse Zeit benötigt, bis er den zusätzlichen Strom liefert. Auch ist die Stromabgabe des Generators bei geringer Drehzahl deutlich reduziert, so dass - zumindest zeitweilig - ein Teil des Strombedarfs auch aus dem dritten Energiespeicher gedeckt werden muss. Als Folge davon sind Fahrsituationen vorstellbar, bei denen die dynamische Reserve des Bordnetzes unter 100A absinkt. Schaltet man in diesem Augenblick einen dynamischen Hochstromverbraucher dazu (z. B. Lenkbewegung), so wird die Strombilanz negativ und ein Spannungseinbruch des 12V-Bordnetzes ist die Folge. Um diese - möglicherweise gefährliche - Situation zu vermeiden, muss man den ersten DC/DC-Spannungswandler - und in der Folge davon auch den dritten Energiespeicher - für wesentlich höhere Abgabeströme auslegen; etwa für 300 oder 500A. Dies ist aber teuer und ökonomisch wenig sinnvoll, da ja der Spitzenstrom nur kurzfristig benötigt wird.

Zum Anderen erfolgt die Auslegung von Ladespannung und Kapazität des zweiten Energiespeichers, der vorzugsweise mit Doppelschichtkondensatoren gebildet ist, unter dem Gesichtspunkt, auch bei extremen Tieftemperaturen mehrere Startversuche bis zu einem sicheren Anlauf der Verbrennungsmaschine zu ermöglichen. Nach erfolgreichem Start wird dann der zweite Energiespeicher mittels des zweiten DC/DC-Spannungswandlers aus dem dritten Energiespeicher wieder nachgeladen. Um eine hinreichend kurze Ladezeit zu erreichen, muss der zweite DC/DC-Wandler beispielsweise 50A liefern können. Dies stellt einen sinnvollen Kompromiss zwischen Nachladezeit und Kosten dar. Schließt man nun die dynamischen Hochstromverbraucher parallel zum dritten Energiespeicher an, so kann dieser- aufgrund seines extrem niedrigen Innenwiderstandes - den benötigten, sehr hohen Strom liefern, jedoch sinkt dabei seine Ladespannung. Zur Nachladung stehen jedoch nur - wie beschrieben - 50A vom zweiten DC/DC-Wandler zur Verfügung. Bleibt nun der Hochstromverbraucher für längere Zeit eingeschaltet, so wird die Spannung am zweiten Energiespeicher trotz der Nachladung absinken und eine dauerhaft sichere Funktion des Verbrauchers ist nicht mehr gegeben. Um diese - möglicherweise gefährliche - Situation zu vermeiden, muss man den zweiten DC/DC-Wandler für wesentlich höhere Abgabeströme auslegen; etwa für 100 oder 200A. Dies ist aber teuer und ökonomisch wenig sinnvoll, da ja der Strom nur kurzfristig benötigt wird.

Ziel der Erfindung ist, diese Probleme zu vermeiden.

Hierzu ist erfindungsgemäß bei einem Bordnetz mit einem Verbraucher-Generator-Teilnetz mit zumindest einem elektrischen Verbraucher, einem Generator und einem ersten Energiespeicher, einem Starterteilnetz mit einem Starter und einem zweiten Energiespeicher, dessen Nominalspannung größer als die Nominalspannung des ersten Energiespeichers ist und der insbesondere mit Doppelschichtkondensatoren gebildet ist, einem Zwischennetz mit einem dritten Energiespeicher, insbesondere einem Lithium-Ionen- oder Lithium-Polymer-Akkumulator, dessen Nominalspannung größer als die Nominalspannung des zweiten Energiespeichers, bei dem das Zwischennetz mit dem Verbrauchernetz über einen ersten Spannungswandler und mit dem Starternetz über einen zweiten Spannungswandler elektrisch gekoppelt ist, und das Bordnetz eine Kontrolleinrichtung aufweist, die die elektrischen Spannungen im Zwischennetz, im Verbraucher-Generator-Teilnetz und im Starterteilnetz steuert oder regelt, der zweite Energiespeicher über einen steuerbaren Schalter mit dem ersten Energiespeicher verbunden, wobei der steuerbare Schalter von einer Steuereinrichtung nur geschlossen werden kann, wenn sich die Spannungen am ersten Energiespeicher und am zweiten Energiespeicher maximal um einen vorgegebenen Differenzwert unterscheiden, und die Spannung am ersten Energiespeicher größer als ein vorgegebener Minimalwert ist.

Aufgrund der Spezifizierung eines erweiterten Spannungsbereiches von 24V bei einem maximal 60s dauernden Jumpstarts in üblichen 12V-Verbrauchernetzen bei normaler Umgebungstemperatur ohne Funktionseinschränkungen ist der Betrieb von Hochstromlasten am zweiten Energiespeicher des Starterteilnetzes erlaubt, wobei die höhere Nominalspannung im Wesentlichen eine erhöhte Erwärmung der Lasten bewirkt und diese Spannung - abhängig von Umgebungstemperatur und Betriebszustand des Fahrzeuges durch den zweiten Spannungswandler einstellbar ist.

Da es allerdings vorstellbar ist, dass der dauerhafte Betriebsstrom der Hochstromlasten größer ist, als der maximale Ausgangsstrom des zweiten DC/DC-Spannungswandlers, würde in der Folge die Versorgungsspannung der Hochstromlasten unter den minimal zulässigen Wert absinken, was nun durch das erfindungsgemäße Einschalten des steuerbaren Schalters durch die Steuereinrichtung verhindert werden kann.

Da das 12V-Verbraucherteilnetz bei laufendem Motor sowohl vom Generator als auch über den ersten DC/DC-Spannungswandler aus dem dritten Energiespeicher gespeist werden kann, steht hier mehr Energie zur Verfügung, als tatsächlich verbraucht wird. Diese überschüssige Energie kann nun über den Schalter zur zusätzlichen Speisung der Hochstromlasten verwendet werden.

Wenn im Normalzustand die Spannung im Starterteilnetz am zweiten Energiespeicher größer ist als die Spannung im Verbraucher-Generator-Teilnetz am ersten Energiespeicher, ist der Schalter offen. Sind die Spannungen am erstem und am zweiten Energiespeicher nahezu gleich, darf der Schalter geschlossen werden. Die maximal zulässige Spannungsdifferenz muss dabei klein genug sein, um eine Stromspitze zu vermeiden.

Sinkt die Spannung im Verbraucher-Generator-Teilnetz in Folge der zusätzlichen Belastung unter einen vorgegebenen Minimalwert - beispielsweise 9V - so muss der Schalter wieder geöffnet werden, um eine Fehlfunktion der vom 12V-Verbraucher-Generator-Teilnetz versorgten Verbraucher zu vermeiden. Dies könnte ansonsten zu möglicherweise gefährlichem Fahrzeugverhalten führen.

Ist die Spannung am zweiten Energiespeicher kleiner als der vorgegebene Minimalwert der Spannung im Verbraucher-Generator-Teilnetz, so muss ein Schließen des Schalters sicher verhindert werden. Dies kann zum Beispiel bei Defekt des zweiten Energiespeichers oder Installation eines neuen, ungeladenen zweiten Energiespeichers der Fall sein. Hier würde die Betätigung des Schalters die Spannung des Verbraucher-Generator-Teilnetzes einbrechen lassen und die daraus versorgten Verbraucher schlagartig außer Funktion setzen. Auch besteht die Gefahr -etwa bei laufendem Generator - dass über den Schalter unzulässig hohe Ströme fließen können und diesen möglicherweise beschädigen.

Ein weiterer Vorteil ergibt sich durch den erfindungsgemäßen Schalter durch die Möglichkeit beim Motorstart zusätzlich Energie aus dem dritten Energiespeicher zum Starter zu leiten, sobald die Spannung am zweiten Energiespeicher bis in den Bereich der Spannung im Verbraucher-Generator-Teilnetz absinkt. Dies erlaubt entweder die Verkleinerung der Kapazität des zweiten Energiespeichers - was unmittelbar Kosten, Gewicht und Bauraum spart - oder aber eine Verlängerung der möglichen Startdauer beim Kaltstart, bevor der zweite Energiespeicher wiederum nachgeladen werden muss.

Die Erfindung wird nachfolgen anhand eines Ausführungsbeispiels mit Hilfe von Figuren näher beschrieben. Dabei zeigen
- Fig. 1: ein erfindungsgemäßes Bordnetz und
- Fig. 2: eine Ausführung des steuerbaren Schalters und der Steuereinrichtung.

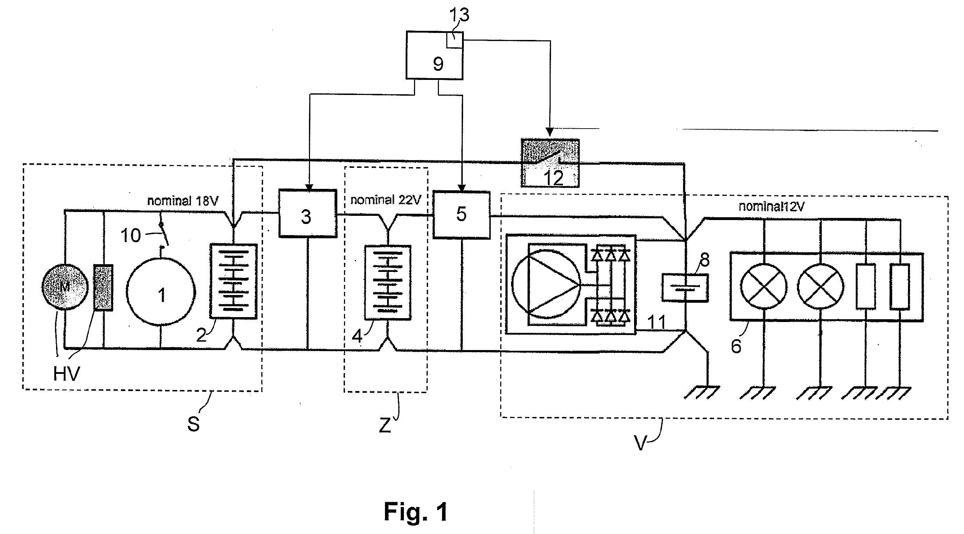

Figur 1 zeigt ein Bordnetz, das einen Starter 1 aufweist, dem ein zweiter Energiespeicher 2 parallel geschaltet ist. Der Starter 1 ist üblicherweise eine elektrische Gleichstrommaschine, die über ein Getriebe oder einen Riemen mit der Kurbelwelle einer Brennkraftmaschine mechanisch gekoppelt ist. Die elektrische Verbindung zwischen dem zweiten Energiespeicher 2 und dem Starter 1 kann über einen Schalter 10, üblicherweise ein Relais, geöffnet und geschlossen werden.

Bei dem zweiten Energiespeicher 2 handelt es sich um einen Energiespeicher mit einer hohen Leistungsdichte, insbesondere ist er mit Doppelschichtkondensatoren gebildet.

Der Starter 1 und der zweite Energiespeicher 2 bilden eine Starterteilnetz S, in dem außerdem Hochstromlasten wie beispielsweise Servomotoren M an den zweiten Energiespeicher 2 angeschlossen sind.

Der zweite Energiespeicher 2 ist über einen zweiten DC/DC-Spannungswandler 3 mit einem dritten Energiespeicher 4 elektrisch verbunden. Bei diesem dritten Energiespeicher 4 handelt es sich um einen Energiespeicher mit hoher Energiedichte, insbesondere um einen Lithium-Polymer oder um einen Lithium-Ionen-Akkumulator. Der dritte Energiespeicher 4 bildet ein Zwischennetz Z.

Der dritte Energiespeicher 4 ist über einen ersten Spannungswandler 5 mit einem Verbraucher-Generator-Teilnetz V verbunden, das zumindest einen elektrischen Verbraucher 6, der hier schematisch als Block dargestellt ist, und einen Generator 11 umfasst. Parallel zu den Verbrauchern 6 ist im hier dargestellten Ausführungsbeispiel ein erster Energiespeicher 8 angeordnet, der insbesondere zur Glättung hochfrequenter Störanteile in diesem Verbraucher-Generator-Teilnetz V dient.

Die Trennung zwischen den verschiedenen Teilnetzen erfolgt nach der erforderlichen Leistung bzw. der erforderlichen Energie. Im hier dargestellten Ausführungsbeispiel ist der zweite Energiespeicher 2 so ausgelegt, dass er hohe Leistungen abgeben kann. Der dritte Energiespeicher 4 hingegen ist so ausgelegt, dass er eine hohe Kapazität aufweist und über eine längere Zeitdauer Energie abgeben kann.

Im Ausführungsbeispiel gemäß Figur 1 sind der erste Spannungswandler 5, der Generator 11 und der zumindest eine Verbraucher 6 direkt miteinander verbunden. Die Spannung im Verbraucher-Generator-Teilnetz V kann sowohl durch den Generator 11 als auch durch den ersten Spannungswandler 5, der vom dritten Energiespeicher 4 gespeist wird, von einer Kontrolleinrichtung 9 gesteuert oder geregelt werden. Der Kontrolleinrichtung 9 werden hierzu (nicht dargestellt) die erforderlichen Parameter wie Ströme und Spannungen in den Teilnetzen zugeführt. Auf der Basie dieser Parameter steuert sie die Spannungswandler 3, 5.

In erfindungsgemäßer Weise weist das Bordnetz der Figur 1 einen steuerbaren Schalter 12 auf, der von einer Steuereinrichtung 13, die im dargestellten Ausführungsbeispiel Teil der Kontrolleinrichtung 9 ist, angesteuert wird.

Da die Differenz zwischen der Spannung am ersten Energiespeicher 8 und am zweiten Energiespeicher 2 sowohl positiv als auch negativ sein kann, muss der Schalter 12 bidirektional sperrend ausgeführt werden.

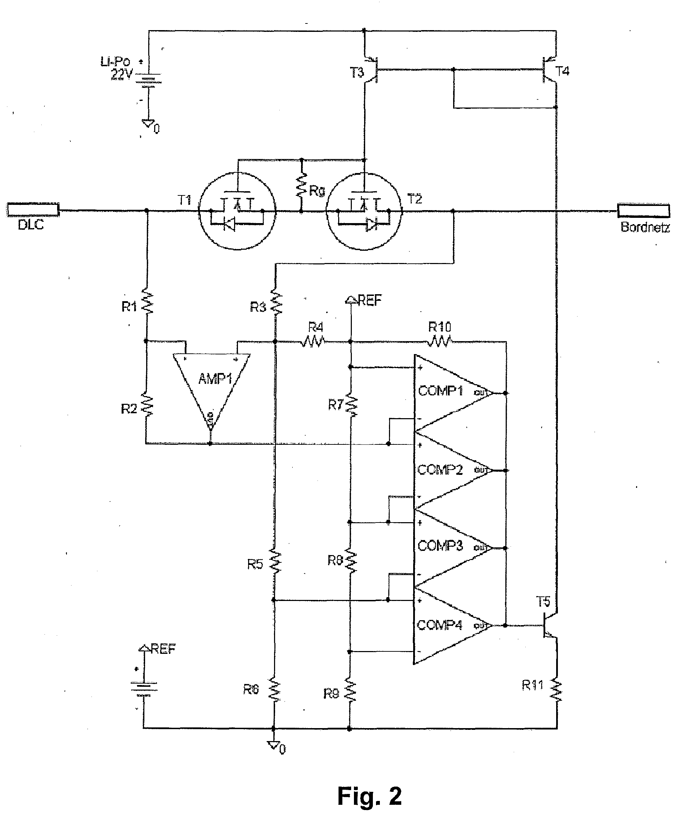

In Figur 2 ist eine vorteilhafte Ausführung des erfindungsgemäßen Schalters 12 dargestellt. Diese ist mit zwei in Reihe geschalteten MOSFETs (Metall Oxid Silizium FeldEffekt Transistor) T1 und T2 gebildet, wobei die beiden Sourceanschlüsse dieser MOSFETs T1, T2 miteinander verbunden sind. Sind beide MOSFETs T1, T2 eingeschaltet, ist der Schalter 12 geschlossen. Sind beide MOSFETs T1, T2 ausgeschaltet, so ist der Schalter 12 geöffnet, da - unabhängig von der Polarität der zu sperrenden Spannung - wenigstens eine der Substratdioden der MOSFETs T1, T2 in Sperrrichtung betrieben wird.

Aus Kostengründen werden dabei zumeist N-Kanal MOSFETs eingesetzt, die jedoch zum Einschalten eine positive Gate-Source-Steuerspannung von einigen Volt benötigen. Beim vorliegenden Bordnetzkonzept eignet sich die Spannung des dritten Energiespeichers Li-Po 22V zur einfachen Erzeugung der Gate-Source-Steuerspannung.

Ein zwischen die Gates und Sources der MOSFETs T1, T2 geschalteter Widerstand Rg hält die Gate-Source-Steuerspannungen im nicht aktivierten Zustand bei 0 Volt, so dass die MOSFETs T1, T2 sicher sperren. Das Schließen des Schalters 12 erfolgt durch Anheben der Gate-Source-Steuerspannung der MOSFETs T1, T2 um beispielsweise 10V, wodurch diese leitend werden. Dazu wird die Basisspannung eines Transistors T5 angehoben, so dass an dessen Kollektor ein Strom fließt, der im wesentlichen durch den Wert eines mit dem Emitter des Transistors T5 verbundenen Widerstands R11, die Basis-Emitterspannung des Transistors T5 und die angelegte Basisspannung bestimmt wird. Dieser Strom fließt zu als Stromspiegel geschalteten Transistoren T3, T4 und erzeugt dort einen Stromfluss durch den Widerstand Rg. Bei entsprechender Bauteileauslegung entsteht dabei am Widerstand Rg eine Spannung von beispielsweise 10V, welche die MOSFETs T1, T2 leitend steuert.

Widerstände R1, R2, R3, R4 und ein Operationsverstärker AMP1 bilden zusammen einen Differenzverstärker, welcher die Spannungsdifferenz zwischen dem ersten 8 und dem zweiten Energiespeicher 2 ermittelt. Der mit einem Eingangsanschluss des Operationsverstärkers AMP1 verbundene Widerstand R4 ist mit seinem anderen Anschluss nicht mit Massepotential, sondern mit einer Referenzspannung REF verbunden; daher nimmt die Ausgangsspannung des Operationsverstärkers AMP1 bei Spannungsdifferenz Null an seinen Eingangsanschlüssen einen Wert an, der etwas unter dem Wert der Referenzspannung REF liegt.

Die Widerstände R1, R2, R3, R4 und der Operationsverstärker AMP1 sind Teile einer Steuereinrichtung 13. Diese weist außerdem einen ersten Spannungsvergleicher COMP1 und einen zweiten Spannungsvergleicher COMP2 auf sowie Widerstände R7, R8 und R9, die zwischen der Referenzspannung REF und dem Massepotential 0 in Serie geschaltet sind und einen Spannungsteiler bilden. Der erste und der zweite Spannungsvergleicher COMP1, COMP2 bilden zusammen mit den Widerständen R7, R8, und R9 einen ersten Fensterkomparator. Die Spannungsvergleicher COMP1 und COMP2 haben dabei Open-Collector Ausgänge mit internem Schalter nach Masse. Als gemeinsamer Pullup Widerstand dient dabei ein Widerstand R10, der zwischen der Referenzspannung REF und den Ausgängen der Spannungsvergleicher COMP1 und COMP2 angeordnet ist.

Die Schaltspannung des Spannungsvergleichers COMP1 ist VREF, Die des Spannungsvergleichers COMP2 ist VREF minus 2xDelta. Dadurch ergibt sich, dass nur dann die Ausgänge der Spannungsvergleichers COMP1 und COMP2 gleichzeitig High-Potential annehmen, wenn die Ausgangsspannung des Differenzverstärkers innerhalb eines Spannungsbereiches von VREF bis VREF-2xDelta liegt. Der Wert von Delta liegt zwischen 10mV und 100mV und ist durch die maximal zulässige Spannungsdifferenz zwischen dem Starter- S und dem Verbraucher-Generator-Teilnetz V bestimmt.

Weitere Spannungsvergleicher COMP3 und COMP4, sowie die Widerstände R7, R8 und R9 bilden zusammen einen zweiten Fensterkomparator, welcher die Spannung am Verbraucher-Generator-Teilnetz V mit einem oberen und einem unteren Grenzwert vergleicht. Auch die Spannungsvergleicher COMP3 und COMP4 haben Open-Collector Ausgänge. Die Spannung am Verbraucher-Generator-Teilnetz V wird über einen Spannungsteiler, der mit Widerständen R5 und R6 gebildet ist, aus der Spannung am Eingang des Differenzverstärkers, der über den Widerstand R3 mit dem Verbraucher-Generator-Teilnetz V verbunden ist, abgeleitet. Die Schaltschwelle des Spannungsvergleichers COMP3 ist so eingestellt, dass er bei Unterschreiten des oberen Grenzwertes der Spannung am Verbraucher-Generator-Teilnetz V auf High-Potential schaltet, der Spannungsvergleicher COMP4 schaltet bei Überschreiten des unteren Spannungswertes der Spannung am Verbraucher-Generator-Teilnetz V auf High-Potential. Die Grenzwerte der Spannung am Verbraucher-Generator-Teilnetz V betragen beispielsweise 13,8V und 9V.

Durch die Verknüpfung der Ausgänge aller vier Spannungsvergleicher COMP1, COMP2, COMP3, COMP4 wird erreicht, das derren Ausgangspegel nur dann High-Potential annehmen kann, wenn die Spannungsdifferenz zwischen dem Starter- S und dem Verbraucher-Generator-Teilnetz V klein genug ist und zugleich die Spannung am Verbraucher-Generator-Teilnetz V innerhalb des zulässigen Bereiches liegt. Damit sind alle oben genannten Bedingungen für das Schließen des Schalters 12 erfüllt, und der Vorgang erfolgt - wie bereits beschrieben - über den Stromfluss durch den Transistor T3.

In dem erfindungsgemäßen Bordnetz können auf einfache und kostengünstige Weise dynamische Hochstromlasten an das Mehrspannungsbordnetz angeschlossen werden. Die Kapazität des zweiten Energiespeichers 2 im Starterteilnetz S, der vorzugsweise mit Doppelschichtkondensatoren gebildet ist, kann unter Beibehaltung der Betriebsdauer des Starters verringert werden, was Kosten, Platz und Gewicht spart. Die mögliche Startdauer bei Kaltstart kann verlängert werden, bevor der zweite Energiespeicher 2 nachgeladen werden muss. Die Schaltung stellt sicher, dass der zulässige Spannungsbereich der Spannung am Verbraucher-Generator-Teilnetz V auch beim Motorstart oder beim Einschalten dynamischer Hochstromlasten beibehalten wird. Die als Schalter verwendeten MOSFETs werden nur statisch betrieben und annähernd lastfrei geschaltet, so dass ein sicherer Betrieb dauerhaft gewährleistet ist. Die auftretende Verlustleistung ist sehr gering und nur durch die Einschaltwiderstände der MOSFETs (R_{DSON}) bestimmt.

## Patentansprüche

1. Bordnetz für ein Kraftfahrzeug, das aufweist:
- ein Verbraucher-Generator-Teilnetz (V) mit zumindest einem elektrischen Verbraucher (6), einem Generator (11) und einem ersten Energiespeicher (8),
- ein Starterteilnetz (S) mit einem Starter (1) und einem zweiten Energiespeicher (2), dessen Nominalspannung größer als die Nominalspannung des ersten Energiespeichers (8) ist und der insbesondere mit Doppelschichtkondensatoren gebildet ist,
- ein Zwischennetz (Z) mit einem dritten Energiespeicher (4), insbesondere einem Lithium-Ionen- oder Lithium-Polymer-Akkumulator, dessen Nominalspannung größer als die Nominalspannung des zweiten Energiespeichers (2) ist,
- wobei das Zwischennetz (Z) mit dem Verbrauchernetz (V) über einen ersten Spannungswandler (5) elektrisch gekoppelt ist,
- wobei das Zwischennetz (Z) mit dem Starternetz (S) über einen zweiten Spannungswandler (3) elektrisch gekoppelt ist, und
- wobei das Bordnetz eine Kontrolleinrichtung (9) aufweist, die die elektrischen Spannungen im Zwischennetz (Z), im Verbraucher-Generator-Teilnetz (V) und im Starterteilnetz (S) steuert oder regelt,
**dadurch gekennzeichnet, dass**
- der zweite Energiespeicher (2) über einen steuerbaren Schalter (12) mit dem ersten Energiespeicher (8) verbunden ist,
- wobei der steuerbare Schalter (12) von einer Steuereinrichtung (13) nur geschlossen werden kann, wenn
- sich die Spannungen am ersten Energiespeicher (8) und am zweiten Energiespeicher (2) maximal um einen vorgegebenen Differenzwert unterscheiden, und
- die Spannung am ersten Energiespeicher (8) größer als ein vorgegebener Minimalwert ist.

2. Bordnetz nach Anspruch 1, **dadurch gekennzeichnet, dass** die Steuereinrichtung (13) als Teil der Kontrolleinrichtung (9) ausgebildet ist.

3. Bordnetz nach Anspruch 1 oder 2, **dadurch gekennzeichnet, dass** mindestens ein Hochstromverbraucher (HV) an das Starterteilnetz (S) angeschlossen ist.
